# EUROPÄISCHE PATENTSCHRIFT

(11) **EP 1 494 980 B1**
(45) Veröffentlichungstag und Bekanntmachung des Hinweises auf die Patenterteilung: **31.12.2008**
(21) Anmeldenummer: 03709813.4
(22) Anmeldetag: 24.03.2003
(51) Int. Cl.: C04B 35/83, C04B 35/80, C04B 35/573, F16D 69/02

(54) **VERBUNDKERAMIKKÖRPER SOWIE VERFAHREN ZUM HERSTELLEN EINES SOLCHEN**
COMPOSITE CERAMIC BODY AND METHOD FOR PRODUCING THE SAME
CORPS EN CERAMIQUE COMPOSITE ET SON PROCEDE DE PRODUCTION

(30) Priorität: 22.03.2002 DE 10213013; 16.05.2002 DE 10222258
(43) Veröffentlichungstag der Anmeldung: 12.01.2005
(73) Patentinhaber: Schunk Kohlenstofftechnik GmbH, 35452 Heuchelheim (DE)
(72) Erfinder: EBERT, Marco, 35083 Wetter (DE); HENRICH, Martin, 35582 Wetzlar (DE); KEHR, Dietrich, 35444 Biebertal (DE); SCHEIBEL, Thorsten, 61231 Bad Nauheim (DE); WEISS, Roland, 45625 Hüttenberg (DE)
(74) Vertreter: Stoffregen, Hans-Herbert
(86) Internationale Anmeldenummer: PCT/EP2003/003041
(87) Internationale Veröffentlichungsnummer: WO 2003/080538

(56) Entgegenhaltungen:
- EP-A- 0 891 956
- US-A1- 2001 051 258

## Beschreibung

Die Erfindung bezieht sich auf einen Verbundkeramikkörper, insbesondere bestimmt für ein tribologisches Bauteil wie Bremsscheibe, umfassend einen faserverstärkten Kohlenstoffkörper mit Kernbereich sowie SiC enthaltendem Oberflächenbereich. Ferner bezieht sich die Erfindung auf ein Verfahren zur Herstellung eines faserverstärkten Verbundkeramikkörpers, insbesondere bestimmt für ein tribologisches Bauteil wie Bremsscheibe, wobei ein Fasern enthaltender Kohlenstoffkörper mit gewünschter Porosität bereitgestellt wird, der Kohlenstoffkörper mit Silizium infiltriert und durch Einleiten einer chemischen Reaktion unter Bildung von SiC der Körper keramisiert wird.

Aus der DE 198 34 571 C2 ist ein Verfahren zur Herstellung von Körpern aus faserverstärkten C/C-Vorkörpern mit einer porösen Kohlenstoff-Matrix bekannt, bei dem der durch Pyrolyse faserverstärkte Vorkörper mit schmelzflüssigem Silizium infiltriert wird. In den Poren kann sich dabei das flüssige Silizium einlagern, um die gewünschte Härte in der Oberflächenschicht des so hergestellten CMC (keramisches Matrix-Verbundmaterial)-Körpers herzustellen.

In der DE 44 38 455 C1 wird ein Verfahren zur Herstellung einer Reibeinheit mittels Infiltration eines porösen Kohlenstoffkörpers mit flüssigem Silizium beschrieben, wobei der poröse Kohlenstoffkörper derart strukturiert ist, dass in definierten Innen- und/oder Außenbereiche Hohlräume und/oder Ausnehmungen zur Kühlung und/oder Versteifung gebildet werden, die nach der Keramisierung in ihrer Form und Größe beibehalten werden.

In der EP-A-0 891 956 wird ein Si-SiC-Körper beschrieben, der durch SiC-Fasern verstärkt ist.

Entsprechende aus CMC-Werkstoffen bestehende Körper können für Bremsscheiben benutzt werden, wie diese in der DE 42 37 655 A1 oder EP 071 214 B1 beschrieben sind.

Aus der JP 0003199172 AA ist ein beschichtetes kohlenstofffaserverstärktes Verbundmaterial bekannt, wobei die Kohlefasern in einer Matrix vorliegen, die im mitileren Teil aus Kohlenstoff und im Oberflächenbereich aus Carbiden besteht. Ausschließlich im Oberflächenbereich verläuft dabei der Übergang vom Inneren zum Äußeren kontinuierlich oder nahezu kontinuierlich.

Die DE 198 05 868 A1 bezieht sich auf ein Verfahren zur Herstellung eines Faserverbundwerkstoffes, wobei eine Faserbeschichtung Verwendung findet, deren Qualität von außen nach innen gesteigert wird, um einen Gradientenwerkstoff zu gewinnen. Hierzu werden in eine Pressform Pressmassen unterschiedlicher Beschichtungsqualität eingebracht, wobei die äußeren Schichten vollständig aus Siliziumcarbid bestehen können. Ferner können sowohl Faserqualität als auch Faserlänge variieren. Die verwendeten Verstärkungsfasern selbst bestehen aus einem Kern mit einer Beschichtung aus Pyrokohlenstoff und einer äußeren Schicht aus pyrolysierbarem Bindemittel, das durch Pyrolyse in Kohlenstoff umgewandelt wird. Eine Infiltration mit flüssigem Silizium kann erfolgen.

Die heutzutage zum Einsatz gelangenden CMC-Bremsscheiben weisen neben einem Kernbereich (Kernlaminat) eine äußeren, fast monolithische SiC-Schicht (Oberflächenbereich) auf. Diese Oberflächenschicht wird aus tribologischen Gründen benötigt. Der Kernbereich sollte dagegen CFC-Eigenschaften aufweisen, um ein möglichst quasi duktiles Bruchversagen des Gesamtsystems zu erzielen. Nach dem derzeitigen Entwicklungsstand ist der Schichtaufbau derart, dass ein ausgeprägter Schichtübergang von der monolithischen Oberflächenbereichsstruktur zum CFC-Kernbereich gegeben ist. Hierdurch bedingt ergeben sich starke Unterschiede in den mechanischen und in den thermophysikalischen Eigenschaften. Optisch ist das entsprechende Schichtsystem dadurch erfassbar, dass die monolithische Schicht nicht nur stark rissbehaftet ist, sondern auch im Einsatz zu weiterer Rissbildung neigt.

Ein Verbundkeramikkörper der eingangs genannten Art ist der US2001/0051258 A1 zu entnehmen. Der Verbundkeramikkörper besteht dabei aus Schichten mit auf Si-SiC-Basis aufgebauten Matrizen, die sich einstückig zwischen Kohlefasern erstrecken, wobei die Matrizen einen Zusammensetzungsgradienten aufweisen derart, dass die Siliziumkonzentration mit zunehmender Entfernung von den Garnen zunimmt.

Der vorliegenden Erfindung liegt das Problem zu Grunde, einen Verbundkeramikkörper sowie ein Verfahren zum Herstellen eines solchen der eingangs genannten Art so weiterzubilden, dass der Verbundkeramikkörper ein gutes Langzeitverhalten zeigt und insbesondere eine geringere Neigung zur Rissbildung an der Oberfläche aufweist. Gleichzeitig sollen jedoch weitgehend die Vorteile des bekannten getrennten Schichtaufbaus in Bezug auf die reibfeste äußere monolithische SiC-Schicht und die Duktilität im Kernbereich beibehalten werden.

Erfindungsgemäß wird das Problem durch einen Verbundkeramikkörper der zuvor beschriebenen Art im Wesentlichen dadurch gelöst, dass die Fasern im Oberflächenbereich eine geringere Filamentenanzahl als im Kernbereich aufweisen und dass der Verbundkeramikkörper SiC derart enthält, dass innerhalb des Kernbereichs ausgehend bis in den Oberflächenbereich hinein der Anteil des SiC sich stetig oder im Wesentlichen stetig ändert. Insbesondere ist der Verbundkeramikkörper in Bezug auf den SiC-Anteil derart stetig gradiert, dass der Kernbereich duktile Eigenschaften und der Oberflächenbereich monolithische SiC-Schicht- bzw. Si/SiC-Schichteigenschaften aufweist.

Dabei sollte der Oberflächenbereich im Wesentlichen folgende Anteile aufweisen:
- SiC in etwa 20 Gew.-% bis in etwa 100 Gew.-%,
- freies Si in etwa 0 Gew.-% bis in etwa 30 Gew.-%,
- Kohlenstoff in etwa 0 Gew.-% bis in etwa 80 Gew.-%,
- Si₃N₄ in etwa 0 Gew.-% bis in etwa 20 Gew.-% und/oder
- B₄C in etwa 0 Gew.-% bis in etwa 20 Gew.-%.

Demgegenüber sollte der Kernbereich Anteile aufweisen von:
- SiC in etwa 0 Gew.-% bis in etwa 70 Gew.-%,
- freies Silicium in etwa 0 Gew.-% bis in etwa 30 Gew.-%,
- Kohlenstoff in etwa 20 Gew.-% bis in etwa 100 Gew.-% und/oder
- B₄C in etwa 0 Gew.-% bis in etwa 20 Gew.-%.

Insbesondere sollte der Verbundkeramikkörper als Verstärkungsfasern enthalten Kohlenstofffasem und/oder Graphitfasern und/oder SiC-Fasern bei Verwendung eines Gewebes, eines Geleges, eines Filzes, eines Flieses oder eines Papiers als kohlenstoffhaltiges Ausgangsmaterial, Kurzfasern im Längenbereich von in etwa 1 mm bis in etwa 60 mm.

Auch können Preformen zur Herstellung der Verbundkeramik benutzt werden, die Kohlenstoff enthalten oder denen ein Kohlenstoffspender zugegeben ist, wobei die Preform mit einem pyrolysierbaren Bindemittel imprägniert ist, wobei drei- oder mehr dimensionale Preforms und Preforms in TFP-Technik (Taylored-Fibre-Placement) für das RTM-Verfahren (Resin-Transfer-Molding) oder Pressverfahren benutzt werden können. Unter "mehrdimensional" werden Preforms mit mehr als 3 Verstärkungsrichtungen gemeint.

In weiterer Ausgestaltung der Erfindung ist vorgesehen, dass der Verbundkeramikkörper durch Pyrolysieren und Keramisieren eines faserhaltigen Kohlenstoffkörpers hergestellt ist, wobei die Fasern im Kernbereich länger als im Oberflächenbereich sind. Ferner können die Fasern mit geringerer Filamentenzahl im Oberflächenbereich als im Kernbereich sein.

Es kann auch vorgesehen sein, dass der Kohlenstoffkörper eine offene Porosität derart aufweist, dass das Porenvolumen im Oberflächenbereich größer als im Kernbereich ist. Insbesondere weist der Kohlenstoflkörper Additive derart auf, die unterschiedliche Kohlenstoffausbeute zeigen, wobei die Kohlenstoffausbeute im Oberflächenbereich geringer als im Kernbereich ist. Als Additive kommen Thermoplaste wie Polyethylen oder Propylen oder Elastomere wie Silikonkautschuk oder Duromere wie niedrigvernetzte Epoxid-Harze oder Naturstoffe wie Sägemehle in Frage. Eine Einstellung der Porosität kann auch durch Korngrößenverteilung der eingesetzten Additive wie Kohlenstoffe, Graphite, SiC-Pulver, Si-Pulver, B₄C-Pulver erfolgen.

Durch die erfindungsgemäße Lehre wird eine Verbundkeramik zur Verfügung gestellt, deren SiC-Gehalt vom Kernbereich zum Oberflächenbereich hin fließend zunimmt. Es erfolgt eine Gradierung des SiC-Gehaltes bzw. Si/SiC-Gehalts mit der Folge, dass der nach dem Stand der Technik unstetige Übergang zwischen Kernbereich, der duktile Eigenschaften aufweist, und Oberflächenbereich, der bevorzugterweise monolithische SiC-SchichtEigenschaften besitzt, unterbunden wird. Hierdurch bedingt sind eine geringere Neigung zur Rissbildung an der Oberfläche, ein besseres Langzeitverhalten und somit auch ein besseres Lebensdauerverhalten erzielbar. Dabei erfolgt der Aufbau der Verbundkeramik derart, dass der Übergang von der monolithischen oder fast monolithischen SiC-Oberflächenstruktur über mehrere Stufen in eine CFC-dominierte CMC-Kemstruktur realisiert ist. Man verändert folglich die Werkstoffzusammensetzung von einer monolithischen oder fast monolithischen Zusammensetzung zu einem faserverstärkten Verbundwerkstoff.

Ein Verfahren zur Herstellung eines Verbundkeramikkörpers, wobei ein Fasern enthaltender Kohlenstoffkörper mit gewünschter Porosität bereitgestellt wird, der Kohlenstoffkörper mit Silizium infiltriert und durch Einleiten einer chemischen Reaktion unter Bildung von SiC der Körper keramisiert wird, zeichnet sich dadurch aus, dass vor der Infiltration des Kohlenstoffkörpers mit Si dieser durch Fasern unterschiedlicher Filamentenanzahl und gezielter Einstellung der Porösität derart strukturiert wird, dass der SiC-Gehalt des Verbundkeramikkörpers vom Innenbereich des Kernbereichs ausgehend bis in den Oberflächenbereich stetig oder im Wesentlichen stetig zunimmt.

Erfindungsgemäß erfolgt eine Strukturierung des Kohlenstoflkörpers durch Auswahl von verschiedenen Faserlängen und/oder Fasern unterschiedlicher Filamentanzahl und/oder gezielte Einstellung der Porosität.

Die Porosität kann durch Additive mit unterschiedlicher Kohlenstoffausbeute eingestellt werden. Auch können Additive verwendet werden, deren Kohlenstoffausbeute im Oberflächenbereich geringer als im Kernbereich ist. Durch Korngrößenverteilung der Additive kann gleichfalls die Porosität im gewünschten Umfang derart eingestellt werden, dass sich im Oberflächenbereich eine quasi monolithische SiC-Struktur und im Kernbereich ein CFC-dominanter Werkstoff ergibt.

Gleiche Möglichkeiten bieten gezielt einstellbare Verfahrensparameter bei der Pyrolyse.

Durch die erfindungsgemäße Lehre wird eine Verbundkeramik zur Verfügung gestellt, die insbesondere für Bremsscheiben, Bremsbeläge, Kupplungen, Kupplungsscheiben, Lager-werkstoffe, Dicht- und Gleitringe, Chargierhilfsmittel für Ofen- und Anlagenbau zum Einsatz gelangen kann. Dabei weist die Verbundkeramik einen Schichtaufbau derart auf, dass der SiC-Gehalt von innen nach außen quasi fließend zunimmt. Eine entsprechende Gradierung kann auch in Bezug auf B₄C oder Si₃N₄ eingestellt werden.

Weitere Einzelheiten, Vorteile und Merkmale der Erfindung ergeben sich nicht nur aus den Ansprüchen, den diesen zu entnehmenden Merkmalen, sondern auch aus der nachfolgenden Beschreibung von Beispielen.

### Beispiel 1

Herstellung einer Kupplungsscheibe mit gradiertem Aufbau:
Einsatz eines Gewebes mit geringem Flächengewicht, wobei 30 Einzellagen Verwendung finden.

Die äußeren 4 Gewebelagen werden mittels einer Sprühbeschichtung mit einem Holzmehl und einem Phenolharzbinder und Ethanol belegt. Der Gewichtsanteil von Holzmehl, Phenolharzbinder und Ethanol beträgt 20% bezogen auf das Faserflächengewicht. Die nächsten 4 Gewebelagen werden analog mit einem Gewichtsanteil von 15% versehen. Die nächsten 4 Lagen werden mit einem Gewichtsanteil von 10%, die nächsten 4 Lagen mit einem Gewichtsanteil von 7%, die nächsten 4 Lagen mit einem Gewichtsanteil von 3% versehen. Die inneren 10 Lagen werden nicht behandelt.

Alle Lagen werden entsprechend des Gradierungverlaufes in ein RTM-Gesenk eingelegt, mit Phenolharz infiltriert und ausgehärtet. Anschließend erfolgt die Carbonisierung. Aus diesem Halbzeug wird ein Ring mit Aufmaß bearbeitet und anschließend siliziert. Das silizierte Bauteil weist nach diesem Prozeß eine nahezu fließende Gradierung (nahezu fließender sich ändernder SiC-Anteil) auf, wobei der Oberflächenbereich folgende Zusammensetzung aufweist: 8% Si, 75% SiC und 17% C, während der Innenbereich wie folgt zusammengesetzt ist: 3% Si, 33% SiC und 64% C.

Schroffe Übergänge sind nicht mehr ersichtlich und die Rißbildung im Oberflächenbereich wird weitestgehend vermieden.

### Beispiel 2

### Herstellung eines Bremsbelages für industrielle Anwendungen mit gradiertem Aufbau:

Zur Herstellung werden Kohlenstoffkurzfasern der Länge 3, 6, 9 und 12 mm eingesetzt. Die Fasern werden in ihrer jeweiligen Länge mit einem kohlenstoffhaltigen Füller, einem Phenolharz und Ethanol versetzt und mittels einer Mischungsaufbeieitung zu einem Compound verarbeitet. Die Abmischung hat folgende Zusammensetzung: 40Vol. % - C-Faser, 30 Vol. % - Kohlenstofffüller und 30 Vol. % Phenolharz.

Das getrocknete Compound wird zur Herstellung des Belages mittels Füllvorrichtung in folgender Reihenfolge in das Pressgesenk eingebracht (je nach Einsatzfall und Befestigung des Belages kann die Gradierung symmetrisch als auch unsymmetrisch zur Mittenachse erfolgen):
10 Gew.- % - mit 3 mm C-Faser
5 Gew.- % - mit Mischung 50 : 50 von 3 mm und 6 mm - C-Faser
5 Gew.-% - mit 6 mm C-Faser
5 Gew.- % - Mischung 50 : 50 von 6 mm und 9 mm C-Faser
5 Gew.% - mit 9 mm C-Faser
5 Gew.- % - mit Mischung 50 : 50 von 9 mm und 12 mm C-Faser
15 Gew.- % - mit 12 mm C-Faser
15 Gew.-% - mit 12 mm C-Faser
5 Gew.- % - mit Mischung 50 : 50 von 9 mm und 12 mm C-Faser
5 Gew.- % - mit 9 mm C-Faser
5 Gew.-% - Mischung 50 : 50 von 6 mm und 9 mm C-Faser
5 Gew.% - mit 6 mm C-Faser
5 Gew.% - mit Mischung 50 : 50 von 3 mm und 6 mm - C-Faser
10 Gew.- % - mit 3 mm C-Faser

Nach der Carbonisierung und Silizierung konnte folgende Gradierung festgestellt werden:

Der oberflächennahe Bereich besteht aus 85% SiC, 4% Si und 11% C, während der Innenbereich aus 38% SiC, 3% Si und 59% C besteht. Die entstandene Gradierung ist fließend und der Belag zeigt nach der Herstellung sehr wenig Risse im Bereich der Oberfläche.

Weitere Einzelheiten, Vorteile und Merkmale ergeben sich aus der nachfolgenden Beschreibung.

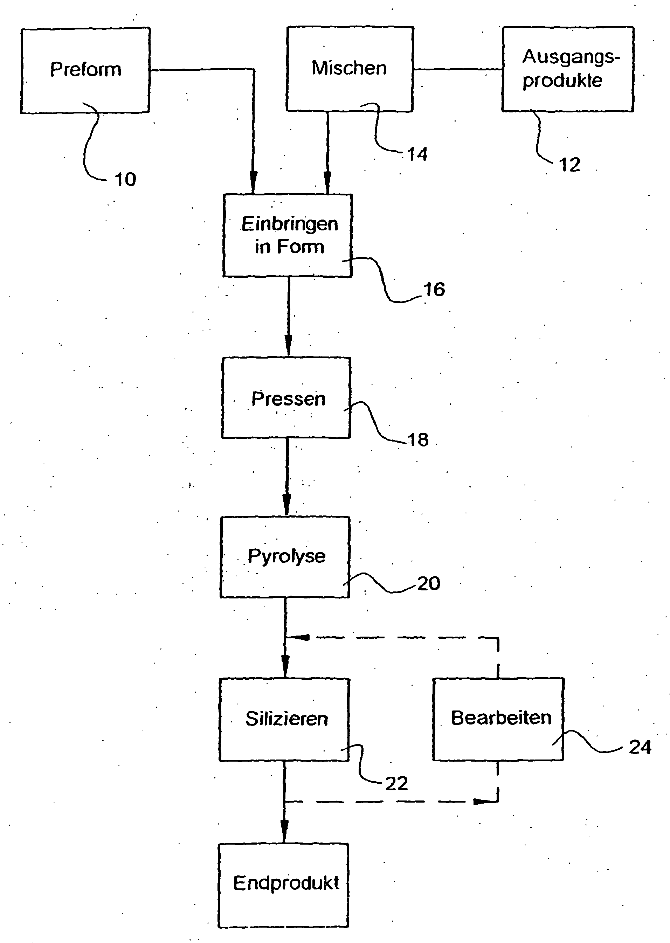

In der einzigen Figur ist rein schematisch das erfindungsgemäße Verfahren zur Herstellung eines Verbundkeramikkörpers insbesondere bestimmt für ein tribologisches Bauteil dargestellt. Dabei können eine oder mehrere Preformen 10 unmittelbar oder Ausgangsprodukte 12 wie Kohlenstofffasern mit einem kohlenstoffhaltigen Füller sowie Bindemittel und z. B. Ethanol nach ihrem Mischen 14 in eine Form wie RTM-Gesenk eingebracht werden (Schritt 16). Die Preform bzw. Preformen, die auch Gewebelagen einschließen, können vor oder nach dem Einbringen in die Form mit einem Bindemittel imprägniert werden. Auch das Hinzufügen von weiteren Additiven ist möglich. Ferner werden die Ausgangsstoffe derart angeordnet bzw. mit Additiven versetzt, dass sich im herzustellenden Keramikkörper eine quasi fließende bzw. vielstufige Änderung des SiC-Gehalts derart ergibt, dass der Außenbereich Eigenschaften einer monolithischen oder in etwa monolithischen SiC-Schicht aufweist, der Kern jedoch eine CFC-dominierte CMC-Struktur.

In einem folgenden Verfahrensschritt 18 erfolgt das Pressen zu einer gewünschten Geometrie, um sodann in einem Verfahrensschritt 20 den aus der Form genommenen Körper zu pyrolysieren, d. h. zu karbonisieren bzw. graphitieren.

Das Karbonisieren kann in einem Temperaturbereich zwischen 500 °C und 1450 °C, insbesondere zwischen 900 °C und 1200 °C und das Graphitieren in einem Temperaturbereich zwischen 1500 °C und 3000 °C, insbesondere zwischen 1800 °C und 2500 °C erfolgen. Anschließend wird der Kohlenstoffkörper siliziert, wobei der Kohlenstoffkörper in ein mit Silizium gefülltes Behältnis eingebracht und über einen Zeitraum von z. B. 1 bis 7 Stunden einer Temperatur im Bereich von in etwa 1450 °C bis 1700 °C ausgesetzt wird (Verfahrensschritt 22). Der so hergestellte Verbundkeramikkörper kann sodann gegebenenfalls bearbeitet werden (Verfahrensschritt 24), um eine gewünschte Endgeometrie zu erzielen. Alternativ oder ergänzend besteht die Möglichkeit, den Körper vor dem Silizieren zu bearbeiten.

Das Silizieren kann auch abweichend zu dem zuvor beschriebenen Verfahren wie folgt durchgeführt werden. So ist ein Druck-/Vakuum-Prozess in einer Siliziumschmelze bei einer Temperatur zwischen in etwa 1450 °C bis in etwa 2000 °C möglich. Auch ein Schlickerverfahren mit siliziumhaltigem Schlicker, der vorher aufgebracht wird, ist möglich. Auch kann ein Docht- oder Kapillarverfahren zur Anwendung gelangen, bei dem poröse Dochte in Kontakt mit dem Kohlenstoflkörper und siliziumbefülltem Behältnis stehen.

Entsprechend hergestellte Verbundkeramikkörper zeigen den Vorteil, dass vom Kernbereich in Richtung des Oberflächenbereichs ein quasi fließend sich ändernder SiC-Gehalt erreichbar ist, wobei der Kernbereich die Eigenschaften eines CFC-dominanten Werkstoffes aufweist und der Oberflächenbereich die einer monolithischen oder fortmonolithischer SiC-Struktur.

Die zuvor erläuterten und insbesondere den Beispielen zu entnehmenden Verfahrensschritte sind losgelöst von vorausgehenden Schritten schutzbegründend. Auch sind die angegebenen Zahlenwerte rein beispielhaft und nicht schutzeinschränkend.

## Patentansprüche

1. Verbundkeramikkörper, insbesondere bestimmt für ein tribologisches Bauteil wie Bremsscheibe, umfassend einen faserverstärkten Kohlenstolikörper mit Kernbereich sowie SiC enthaltendem Oberflächenbereich,
**dadurch gekennzeichnet,**
**dass** die Fasern im Oberflächenbereich eine geringere Filamentenanzahl als im Kernbereich aufweisen und dass der Verbundkeramikkörper SiC derart enthält, dass vom Innenbereich des Kernbereichs ausgehend bis in den Oberflächenbereich hinein der Anteil des SiC sich stetig oder im Wesentlichen stetig ändert:

2. Verbundkeramikkörper nach Anspruch 1,
**dadurch gekennzeichnet,**
**dass** der Verbundkeramikkörper in Bezug auf den SiC-Anteil derart fließend gradiert ist, dass der Kernbereich duktile Eigenschaften und der Oberflächenbereich monolithische SiC-Schicht- bzw. Si/SiC-Schichteigenschaften aufweist.

3. Verbundkeramikkörper nach Anspruch 1,
**dadurch gekennzeichnet,**
**dass** zur Einstellung der Porosität der Kohlenstoffkörper Additive mit unterschiedlicher Kohlenstoffausbeute enthält.

4. Verbundkeramikkörper nach Anspruch 3,
**dadurch gekennzeichnet,**
**dass** Additive Thermoplaste mit unterschiedlicher Kohlenstoffausbeute sind.

5. Verbundkeramikkörper nach Anspruch 3 oder 4,
**dadurch gekennzeichnet,**
**dass** Additive Thermoplaste wie Polyethylen oder Propylen und/oder Elastomere wie Silikonkautschuk und/oder Duromere wie niedrigvernetzte Epoxidharze und/oder Naturstoffe wie Sägemehl sind.

6. Verbundkeramikkörper nach zumindest einem der Ansprüche 3-5,
**dadurch gekennzeichnet,**
**dass** die Porosität durch Korngrößenverteilung der eingesetzten Additive wie Kohlenstoffe und/oder Graphite und/oder SiC-Pulver und/oder Si-Pulver und/oder B₄C-Pulver eingestellt ist.

7. Verbundkeramikkörper nach zumindest Anspruch 1,
**dadurch gekennzeichnet,**
**dass** der Oberflächenbereich des Verbundkeramikkörpers enthält SiC zwischen in etwa 20 Gew.-% bis in etwa 100 Gew.-%, freies Si zwischen in etwa 0 Gew.-% und in etwa 30 Gew.-%, Kohlenstoff zwischen in etwa 0 Gew.-% und in etwa 80 Gew.-%, Si₃N₄ zwischen in etwa 0 Gew.-% bis in etwa 20 Gew.-% und/oder B₄C zwischen in etwa 0 Gew.-% bis in etwa 20 Gew.-%.

8. Verbundkeramikkörper nach zumindest Anspruch 1,
**dadurch gekennzeichnet,**
**dass** der Kernbereich des Verbundkeramikkörpers enthält SiC zwischen in etwa 0 Gew.-% bis in etwa 70 Gew.-%, freies Si in etwa 0 Gew.-% bis in etwa 30 Gew.-%, Kohlenstoff zwischen in etwa 20 Gew.-% bis in etwa 100 Gew.-% und/oder B₄C in etwa 0 Gew.-% bis in etwa 20 Gew.-%.

9. Verfahren zur Herstellung eines faserverstärkten Verbundkeramikkörpers, insbesondere bestimmt für ein tribologisches Bauteil wie Bremsscheibe, wobei ein Fasern enthaltender Kohlenstoffkörper mit gewünschter Porosität bereitgestellt wird, der Kohlenstoffkörper mit Silizium infiltriert und durch Einleiten einer chemischen Reaktion unter Bildung von SiC der Körper keramisiert wird ,
**dadurch gekennzeichnet, dass** vor der Infiltration des Kohlenstoffkörpers mit Si dieser durch Fasern unterschiedlicher Filamentenanzahl und gezielter Einstellung der Porösität derart strukturiert wird, dass der SiC-Gehalt des Verbundkeramikkörpers vom Innenbereich des Kernbereichs ausgehend bis in den Oberflächenbereich stetig oder im Wesentlichen stetig zunimmt.

10. Verfahren nach Anspruch 9,
**dadurch gekennzeichnet,**
**dass** Fasern mit im Kernbereich größerer Länge als im Oberflächenbereich verwendet werden.

11. Verfahren nach Anspruch 9,
**dadurch gekennzeichnet,**
**dass** Fasern mit geringerer Filamentanzahl im Oberflächenbereich als im Kernbereich verwendet werden.

12. Verfahren nach Anspruch 9,
**dadurch gekennzeichnet,**
**dass** die Porosität durch Additive mit unterschiedlicher Kohlenstoffausbeute eingestellt wird.

13. Verfahren nach Anspruch 9 oder 12,
**dadurch gekennzeichnet,**
**dass** im Oberflächenbereich Additive verwendet werden, deren Kohlenstoffausbeute geringer als im Kernbereich ist.

14. Verfahren nach zumindest einem der Ansprüche 9, 12 oder 13,
**dadurch gekennzeichnet,**
**dass** die Porosität durch Korngrößenverteilung der Additive eingestellt wird.

15. Verfahren nach zumindest einem der Ansprüche 9, 12, 13 oder 14,
**dadurch gekennzeichnet,**
**dass** als Additive Thermoplaste wie Polyethylen oder Propylen und/oder Elastomere wie Silikonkautschuk und/oder Duromere wie niedrigvernetzte Epoxidharze und/oder Naturstoffe wie Sägemehl verwendet werden.

16. Verfahren nach zumindest einem der Ansprüche 9, 12, 13, 14 oder 15,
**dadurch gekennzeichnet,**
**dass** als Additive solche mit unterschiedlicher Korngrößenverteilung wie Kohlenstoffe und/oder Graphite und/oder SiC-Pulver und/oder Si-Pulver und/oder B₄C-Pulver verwendet werden.

17. Verfahren nach zumindest einem der Ansprüche 9 bis 16 zur Herstellung eines tribologischen Bauteils, insbesondere in Form einer Kupplungsscheibe,
**dadurch gekennzeichnet,**
**dass** ein aus Einzellagen bestehendes Gewebe verwendet wird, dass äußere Gewebelagen mittels einer Sprühbeschichtung aus einem Mehl eines nachwachsenden Rohstoffs wie Holz und einem Bindemittel belegt werden, dass nachfolgende Gewebelagen entsprechend sprühbeschichtet werden, wobei der Gewichtsanteil der durch die Sprühbeschichtung aufgebrachten Materialien von gemeinsam sprühbeschichteten Gewebelagen von außen nach innen abnimmt.

18. Verfahren nach Anspruch 17,
**dadurch gekennzeichnet,**
**dass** die Lagen entsprechend durch die Sprühbeschichtung erzielten Gradierungsverlaufs in eine Form wie RTM-Gesenk eingelegt, mit einem Harz infiltriert und sodann ausgehärtet werden.

19. Verfahren nach Anspruch 17 oder 18,
**dadurch gekennzeichnet,**
**dass** nach dem Aushärten ein Carbonisieren, sodann ein Bearbeiten und schließlich ein Silizieren erfolgt.

20. Verfahren nach zumindest einem der Ansprüche 9 bis 19,
**dadurch gekennzeichnet,**
**dass** zur Herstellung des Verbundkeramikkörpers eine oder mehrere Preformen verwendet werden.

## Claims

1. A composite ceramic body, designed in particular for a tribological component such as a brake disk, comprising a fiber-reinforced carbon body with core area as well as an SiC-containing surface area,
**characterized in**
**that** the fibers in the surface area have a lower filament count than in the core area and the composite ceramic body contains SiC in such a way that inside the core area, and continuing into the surface area, the SiC proportion changes constantly or essentially constantly.

2. The composite ceramic body of claim 1,
**characterized in**
**that** the composite ceramic body is flowingly graded with respect to the SiC proportion such that the core area has ductile properties and the surface area has monolithic SiC layer or Si/SiC layer properties.

3. The composite ceramic body of claim 1,
**characterized in**
**that** the carbon body contains additives with different carbon yields for adjusting the porosity.

4. The composite ceramic body of claim 3,
**characterized in**
**that** additives are thermoplastics with different carbon yields.

5. The composite ceramic body of claim 3 or 4,
**characterized in**
**that** additives are thermoplastics such as polyethylene or propylene, and/or elastomers such as silicon rubber, and/or duromers such as low cured epoxide resins and/or natural substances such as sawdust.

6. The composite ceramic body of at least one of claims 3-5,
**characterized in**
**that** the porosity is adjusted via the grain size distribution of the used additives such as carbons and/or graphites and/or SiC powder and/or Si powder and/or B₄C powder.

7. The composite ceramic body of at least claim 1,
**characterized in**
**that** the surface area of the composite ceramic body contains between approx. 20% by weight and up to approx. 100% by weight of SiC, between approx. 0% by weight and approx. 30% by weight of free Si, between approx. 0% by weight and approx. 80% by weight of carbon, between approx. 0% by weight and up to approx. 20% by weight of Si₃N₄, and/or between approx. 0% by weight and up to approx. 20% by weight of B₄C.

8. The composite ceramic body of at least claim 1,
**characterized in**
**that** the core area of the composite ceramic body contains between approx. 0% by weight and up to approx. 70% by weight of SiC, approx. 0% by weight and up to approx. 30% by weight of free Si, between approx. 20% by weight and up to approx. 100% by weight of carbon, and/or approx. 0% by weight and up to approx. 20% by weight of B₄C.

9. A process for producing a fiber-reinforced composite ceramic body, designed in particular for a tribological component such as a brake disk, wherein a fiber-containing carbon body with desired porosity is made available, the carbon body is infiltrated with silicon and ceramicized by initiating a chemical reaction while forming SiC,
**characterized in**
**that** prior to the infiltration of the carbon body with Si, said carbon body is structured by fibers of different filament count and selective adjustment of the porosity in such a way that the SiC content of the composite ceramic body increases constantly or essentially constantly starting from the interior of the core area up into the surface area.

10. The process of claim 9,
**characterized in**
**that** fibers with a greater length in the core area than in the surface area are used.

11. The process of claim 9,
**characterized in**
**that** fibers with a lower filament count in the surface area than in the core area are used.

12. The process of claim 9,
**characterized in**
**that** the porosity is adjusted with additives having different carbon yields.

13. The process of claim 9 or 12,
**characterized in**
**that** in the surface area are used additives having a lower carbon yield than in the core area.

14. The process of at least one of claims 9, 12 or 13,
**characterized in**
**that** the porosity is adjusted according to the grain size distribution of the additives.

15. The process of at least one of claims 9, 12, 13 or 14,
**characterized in**
**that** thermoplastics such as polyethylene or propylene, and/or elastomers such as silicon rubber, and/or duromers such as low cured epoxide resins, and/or natural substances such as sawdust are used as additives.

16. The process of at least one of claims 9, 12, 13, 14 or 15,
**characterized in**
**that** additives with different grain size distribution, such as carbons and/or graphites and/or SiC powder and/or Si powder and/or B₄C powder are used.

17. The process of at least one of claims 9 to 16 for producing a tribological component, particularly in the form of a clutch disk,
**characterized in**
**that** a fabric consisting of individual layers is used, that outer fabric layers are coated with a spray coating of a powder of a renewable raw material such as wood and a binding agent, that subsequent fabric layers are correspondingly spray-coated, whereby the proportion in weight of the materials applied by spray coating from jointly spray-coated fabric layers decreases from the outside toward the inside.

18. The process of claim 17,
**characterized in**
**that** in accordance with the course of grading achieved by spray coating the layers are placed in a mold such as an RTM die, infiltrated with a resin, and then hardened.

19. The process of claim 17 or 18,
**characterized in**
**that** after the hardening takes place a carbonization, and then a processing, and finally a silicizing.

20. The process of at least one of claims 9 to 19,
**characterized in**
**that** one or several preforms are used to produce the composite ceramic body.

## Revendications

1. Corps en céramique composite, en particulier destiné à un composant tribologique tel qu'un disque de frein, comprenant un corps en carbone renforcé par des fibres avec une zone noyau ainsi qu'une zone superficielle contenant du SiC,
**caractérisé en ce**
**que** les fibres dans la zone superficielle présentent un plus faible nombre de filaments que dans la zone noyau, et que le corps en céramique composite contient du SiC de telle manière que depuis l'intérieur de la zone noyau jusqu'à l'intérieur de la zone superficielle, la fraction de SiC varie en continu ou sensiblement en continu.

2. Corps en céramique composite selon la revendication 1,
**caractérisé en ce**
**qu'**en ce qui concerne la fraction de SiC, le corps en céramique composite est échelonné de manière fluide de sorte que la zone noyau présente des propriétés ductiles et la zone superficielle des propriétés de couches SiC ou Si/SiC monolithiques.

3. Corps en céramique composite selon la revendication 1,
**caractérisé en ce**
**que** pour ajuster la porosité, le corps en carbone contient des additifs avec différents coefficients de carbone.

4. Corps en céramique composite selon la revendication 3,
**caractérisé en ce**
**que** les additifs sont des thermoplastiques avec différents coefficients de carbone.

5. Corps en céramique composite selon la revendication 3 ou 4,
**caractérisé en ce**
**que** les additifs sont des thermoplastiques tels que du polyéthylène ou du propylène et/ou des élastomères tels que du caoutchouc au silicone et/ou des duromères tels que des résines époxy faiblement réticulées et/ou des matières naturelles telles que de la sciure de bois.

6. Corps en céramique composite selon au moins l'une des revendications 3 à 5,
**caractérisé en ce**
**que** la porosité est ajustée par répartition granulométrique des additifs mis en oeuvre tels que carbones et/ou graphites et/ou poudre de SiC et/ou poudre de Si et/ou poudre de B₄C.

7. Corps en céramique composite selon au moins la revendication 1,
**caractérisé en ce**
**que** la zone superficielle du corps en céramique composite contient du SiC entre environ 20 % et environ 100 % en poids, du Si libre entre environ 0 % et environ 30 % en poids, du carbone entre environ 0 % et environ 80 % en poids, du Si₃N₄ entre environ 0 % et environ 20 % en poids et/ou du B₄C entre environ 0 % et environ 20 % en poids.

8. Corps en céramique composite selon au moins la revendication 1,
**caractérisé en ce**
**que** la zone noyau du corps en céramique composite contient du SiC entre 0 % et environ 70 % en poids, du Si libre entre environ 0 % et environ 30 % en poids, du carbone entre environ 20 % et environ 100 % en poids et/ou du B₄C entre environ 0 % et environ 20 % en poids.

9. Procédé pour la production d'un corps en céramique composite renforcé par des fibres, en particulier destiné à un composant tribologique tel qu'un disque de frein, sachant qu'est mis à disposition un corps en carbone contenant des fibres et présentant la porosité souhaitée, qui infiltre du silicium dans le corps en carbone et céramise le corps en déclenchant une réaction chimique sous formation de SiC,
**caractérisé en ce**
**qu'**avant l'infiltration du corps en carbone avec du Si, ce corps est structuré par des fibres présentant différents nombres de filaments et par un ajustage ciblé de la porosité de telle manière que depuis l'intérieur de la zone noyau jusqu'à la zone superficielle la teneur en SiC du corps en céramique composite augmente en continu ou sensiblement en continu.

10. Procédé selon la revendication 9,
**caractérisé en ce**
**que** dans la zone noyau, des fibres de plus grande longueur que dans la zone superficielle sont utilisées.

11. Procédé selon la revendication 9,
**caractérisé en ce**
**que** de fibres présentant un plus faible nombre de filaments dans la zone superficielle que dans la zone noyau sont utilisées.

12. Procédé selon la revendication 9,
**caractérisé en ce**
**que** la porosité est ajustée par des additifs avec différents coefficients de carbone.

13. Procédé selon la revendication 9 ou 12,
**caractérisé en ce**
**que** dans la zone superficielle sont utilisés des additifs dont le coefficient de carbone est plus faible que dans la zone noyau.

14. Procédé selon au moins l'une des revendications 9, 12 ou 13,
**caractérisé en ce**
**que** la porosité est ajustée par répartition granulométrique des additifs.

15. Procédé selon au moins l'une des revendications 9, 12, 13 ou 14,
**caractérisé en ce**
**que** des thermoplastiques tels que du polyéthylène ou du propylène et/ou des élastomères tels que du caoutchouc au silicone et/ou des duromères tels que des résines époxy faiblement réticulées et/ou des matières naturelles telles que de la sciure de bois sont utilisés comme additifs.

16. Procédé selon au moins l'une des revendications 9, 12, 13, 14 ou 15,
**caractérisé en ce**
**que** comme additifs sont utilisés ceux présentant différentes répartitions granulométriques tels que des carbones et/ou des graphites et/ou de la poudre de SiC et/ou de la poudre de Si et/ou de la poudre de B₄C.

17. Procédé selon au moins l'une des revendications 9 à 16 pour la production d'un composant tribologique, en particulier sous forme d'un disque d'embrayage,
**caractérisé en ce**
**qu'**est utilisé un tissu constitué de couches isolées, que les couches de tissu extérieures sont garnies d'une revêtement par pulvérisation d'une poudre d'une matière première renouvelable telle que du bois et d'un liant, que les couches de tissu suivantes sont revêtues par pulvérisation de manière analogue, sachant que la part en poids des matériaux apportés par pulvérisation de la totalité des couches de tissu revêtues par pulvérisation décroît de l'extérieur vers l'intérieur.

18. Procédé selon la revendication 17,
**caractérisé en ce**
**que** les couches sont placées dans un moule tel qu'une matrice RTM en conformité avec l'échelonnement obtenu par le revêtement par pulvérisation, sont infiltrées avec une résine, et ensuite durcies.

19. Procédé selon la revendication 17 ou 18,
**caractérisé en ce**
**qu'**après le durcissement sont effectués une carbonisation, puis un façonnage et enfin une silication.

20. Procédé selon au moins l'une des revendications 9 à 19,
**caractérisé en ce**
**qu'**une ou plusieurs préforme(s) est/sont utilisée(s) pour fabriquer le corps en céramique composite.
